# EUROPEAN PATENT SPECIFICATION

(11) **EP 2 859 974 B1**
(45) Date of publication and mention of the grant of the patent: **01.02.2017**
(21) Application number: 14187960.1
(22) Date of filing: 07.10.2014
(51) Int. Cl.: B23B 29/02, B23Q 11/12, B23Q 1/38, B23Q 5/32

(54) **Boring machine tool**
Werkzeug für eine Bohrmaschine
Outil de coupe pour une aléseuse

(30) Priority: 09.10.2013 IT MO20130283
(43) Date of publication of application: 15.04.2015
(73) Proprietor: PAMA S.P.A., 38068 Rovereto (TN) (IT)
(72) Inventor: Nainer, Alberto, 38123 Trento (IT); Procaccini, Mauro, 38060 Calliano (TN) (IT)
(74) Representative: Crugnola, Pietro

(56) References cited:
- EP-A1- 2 615 438
- US-A- 3 899 222
- US-A- 5 540 526

## Description

The invention relates to a boring machine tool according to the preamble of claim 1 and, in particular, refers to an apparatus for guiding and hydrostatically supporting the boring bar of a boring machine tool.

An example of such a boring machine tool is disclosed by EP 2 615 438.

Boring machine tools of known type comprise a boring bar and a hydrostatic supporting apparatus. The latter is provided with a hollow spindle that is rotatable inside a fixed support of the boring machine tool.

The boring bar is provided with a first end to which in use a working tool is fixed that is arranged for performing a required task, and a second end, opposite the first end, which is connected, free to rotate, to an axial movement slide of the machine tool.

In order to perform this task, the boring bar has to be able to rotate around its own longitudinal axis and has to be able to slide or translate axially.

For this purpose, the hollow spindle is provided with a cylindrical cavity arranged for receiving the boring bar and transmitting a rotation motion thereto. In particular, the rotation motion is transmitted by the hollow spindle to the boring bar by using transmission means comprising, for example, one or more tabs fixed to the hollow spindle and slidably engaged in respective longitudinal grooves of the boring bar, which prevent corresponding rotation between the hollow spindle and the boring bar and thus transmit a twisting moment, or torque, to the boring bar.

Further, the hollow spindle guides the boring bar slidably and axially by means of one or more plain bearings, so-called brasses or bushes, contained therein.

In fact, the brasses are provided with hydrostatic pads or pockets supplied with pressurised fluid that are able to support slidably the boring bar in translation. The film of fluid, typically oil, which is formed during operation between the internal surfaces of the brasses and the cylindrical surface of the boring bar prevents the direct contact thereof and thus enables the risk of damage to the aforesaid surfaces through friction and wear to be reduced. The sliding friction coefficient is reduced to very low values.

The existing clearance between the internal surfaces of the brasses and the cylindrical surface of the boring bar (i.e. the difference between the respective diameters) is such as to make a passage or gap of suitable dimensions for the fluid so as to ensure the desired supply pressure inside the hydrostatic pockets. This clearance is generally of the order of hundredths of a millimetre.

The hydrostatic support further ensures the structural stiffness of the tool and suitable damping of the vibrations caused by the machining.

The aforesaid hydrostatic supporting apparatus comprises hydraulic supply resistances arranged for supplying respective hydrostatic pockets at pressure and oil flowrate values that are such as to ensure a thickness of the film of oil between the movable surfaces that is sufficient to prevent contact and/or sliding between the latter in all operating conditions. The hydraulic resistances comprised in boring machine tools of known type usually consist of thin pipes having a passage and length section that are such as to create a desired hydraulic resistance to the passage of the oil. Accordingly, this hydraulic resistance has a substantially fixed value.

In use, when a work load is applied to the boring bar, i.e. when a working tool is connected to the first end of the boring bar to perform a determined requested task, the boring bar is subject to flexure and/or bending stress. This deformation, which is generated by the force impressed by the work load on the boring bar at the first end thereof, is not uniform over the entire boring bar but depends on the distance from the point of application.

A drawback of boring machines of known type is that in some cases they balance the work load that causes flexure and/or bending of the boring bar in a manner that is hardly effective and efficient.

Another drawback of boring machines of known type is that each hydraulic resistance in the shape of thin pipes that supplies a hydrostatic pocket or a group of hydrostatic pockets requires a respective supply manifold. This makes the supply circuit complex and entails great losses of supply fluid.

In fact, the supply manifolds are generally made at an outer surface of the spindle and must therefore have great diameters. Thus the supply manifolds rotate at great peripheral speeds inasmuch as the latter are a function of both the rotation speed of the spindle and of the diameter thereof. The great peripheral speeds of the supply manifolds entail heating of the pressurised fluid, so the supply circuit has to make passages for the fluid of great dimensions in order to avoid an increase in the temperature of the fluid. Nevertheless, providing large passages for the fluid means that there are as great losses and leaks thereof so that it is necessary to provide the supply circuit with a system for recovering the leaked fluid. As a result, the supply circuit is overdimensioned and of considerable complexity.

A further drawback of boring machines of known type lies in the fact that the supply pressure of the hydrostatic pockets is significantly influenced by the machining tolerances of the boring bar and of the brasses, such tolerances determining clearance variations between the internal surfaces of the brasses and the cylindrical surface of the boring bar. In fact, the pressure value of the fluid that supplies the hydrostatic pockets depends on both the supply hydraulic resistance and on the aforesaid clearance. Nevertheless, as the hydraulic resistance is a fixed value, the supply pressure depends exclusively on the fluid film gap thickness that is created between the boring bar and the brasses, which is influenced by the machining tolerances (in particular, the supply pressure is inversely proportional to the cube of the thickness of the fluid film gap). Owing to the inevitable different machining tolerances, boring machine tools that are substantially the same can have in operation supply pressure values in the hydrostatic pockets that are very different and far from an optimum operating value, and such as to influence the behaviour and operating performance. In order to remedy this drawback, and have optimum supply pressure in the pockets, it would be accordingly necessary to modify hydraulic supply resistances, this adjusting operation not always being carried out because of enormous costs.

An object of the present invention is to improve known boring machine tools.

Still another object is to make a boring machine tool provided with a circuit for supplying the hydrostatic pockets with pressurised fluid that is compact and simplified and enables the use of the aforesaid fluid to be optimised.

A further object is to make a boring machine tool provided with a hydrostatic supporting apparatus for a boring bar that effectively counterbalances load imbalances applied to the boring bar.

A still further object is to make a boring machine tool provided with a hydrostatic supporting apparatus that enables a supply pressure of the hydrostatic pockets to be obtained that does not depend on the machining tolerances of the boring bar and of the brasses and does not require the supply circuit to be adjusted, in particular does not require the hydraulic supply resistances to be adjusted.

Such objects and still others are achieved by a boring machine tool made according to any one of the claims set out below.

The invention can be better understood and implemented with reference to the attached drawings that illustrate an embodiment thereof by way of non-limiting example, in which:
Figure 1 is a partial section of a boring machine tool according to the invention;
Figure 2 is a partial section showing a supply system to supply a pressurised fluid to a hydrostatic supporting apparatus of the boring machine tool of Figure 1;
Figure 3 is a partial section of supply conduit means for distributing the pressurised fluid to the hydrostatic supporting apparatus of the boring machine tool according to the invention;
Figure 4 is a partial perspective view of first hydrostatic supporting means of the hydrostatic supporting apparatus of the boring machine tool according to the invention in a configuration dismantled from the boring machine tool;
Figure 5 is an enlarged partial section of hydrostatic pockets of the first hydrostatic supporting means of the boring machine tool of Figure 1;
Figure 6 is an enlarged partial section of the first hydrostatic supporting means of the boring machine tool of Figure 1 showing the path that the fluid travels to reach the hydrostatic pockets of the first hydrostatic supporting means;
Figure 7 is a section like that of Figure 5 showing the path that the fluid travels that passes from the hydrostatic pockets to an external surface of the first hydrostatic supporting means;
Figure 8 is a section like that of Figure 6 showing the path that the fluid travels that passes from the external surface of the first hydrostatic supporting means to the exterior of spindle means of the hydrostatic supporting apparatus;
Figure 9 is a partial perspective view of second hydrostatic supporting means of the hydrostatic supporting apparatus of the boring machine tool according to the invention in a configuration dismantled from the boring machine tool;
Figure 10 is an enlarged partial section of hydrostatic pockets of the second hydrostatic supporting means of the boring machine tool of Figure 1;
Figure 11 is an enlarged detail of Figure 10;
Figure 12 is an enlarged partial section of the second hydrostatic supporting means of the boring machine tool of Figure 1 showing the path that the fluid travels to reach the hydrostatic pockets of the second supporting means;
Figure 13 is a section like that of Figure 10 showing the path that the fluid travels that passes from the hydrostatic pockets to an external surface of the second supporting means;
Figure 14 is a section like that of Figure 12 showing the path that the fluid travels that passes from the external surface of the second hydrostatic supporting means to the exterior of the spindle means of the hydrostatic supporting apparatus;
Figure 15 is a partial section of the boring machine tool of Figure 1 to which a load is applied at a first end thereof; in this Figure some parts of the boring machine tool, i.e. for example a boring bar, have been downscaled to highlight other parts, i.e., for example, the fluid film gap that is created between the boring bar and the hydrostatic supporting apparatus.

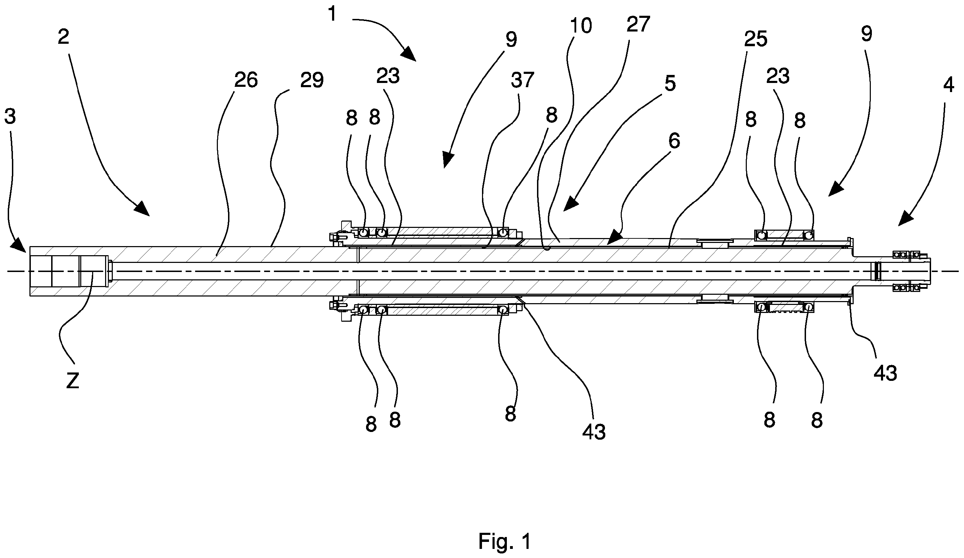

With reference to Figure 1, there is shown a partial section of a boring machine tool 1 according to the invention that is suitable for boring or milling workpieces, provided with a machining axis Z shown by a dashed and dotted line.

The boring machine tool 1 comprises a boring rod or bar 2 provided with a first free end 3 to which in use a working tool is fixed, and a second end 4 opposite the first end 3 that is rotatably connected to an axial movement slide of the boring machine tool 1, of known type and not illustrated in the drawings.

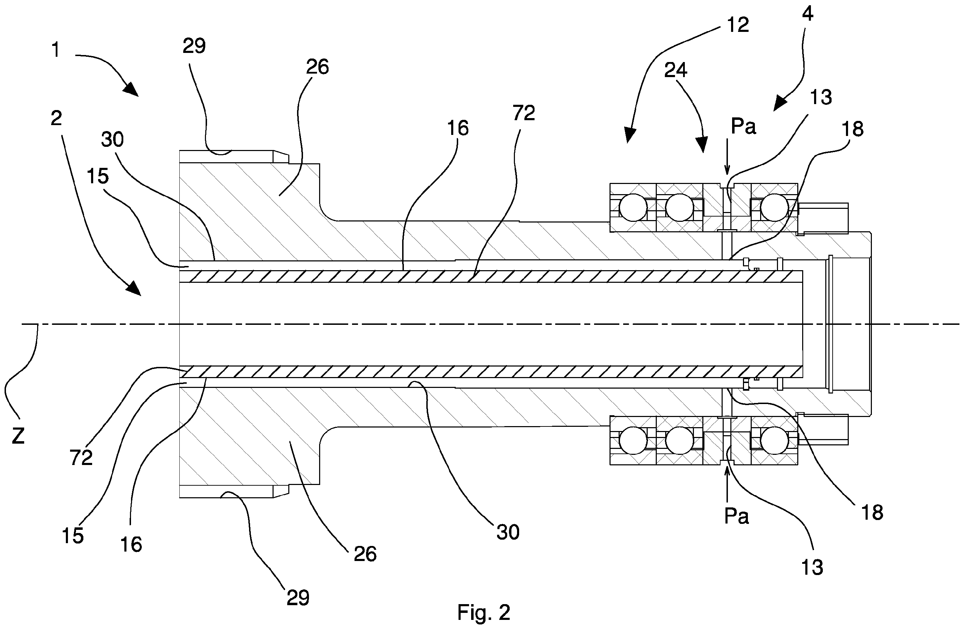

With reference to Figure 2, the boring bar 2 can comprise an external shaft 26 in the shape of a tubular sleeve comprising a cylindrical opening arranged for housing an internal shaft 72 of the boring bar 2. The external shaft 26 and the internal shaft 72 are mounted in such a manner that an inner face 30 of the external shaft 26 and an outer face 16 of the internal shaft 72 are separated by a tubular passage 15 arranged, in use, for receiving a fluid, for example oil, at a supply pressure Pa.

The boring machine tool 1 further comprises a hydrostatic supporting apparatus 5 suitable for supporting slidably and rotatably the boring bar 2. In particular, the boring bar 2 is movable rotatably around and in translation along the machining axis Z.

The hydrostatic supporting apparatus 5 comprises spindle means 6 rotatably fixed by connecting means, not illustrated, to the boring machine tool 1.

The spindle means 6 comprises a spindle 27, in the shape of a hollow tubular sleeve comprising a cylindrical cavity arranged for housing the boring bar 2. The spindle 27 is connected to a seat of the connecting means by rolling bearings 8 that permit the rotation thereof around the machining axis Z and simultaneously prevent the linear movement thereof along said machining axis Z.

The spindle 27 is rotated around the machining axis Z by actuating means of the machine tool 1 that is of known type and is not illustrated in the figures.

Antirotation means, comprising for example one or more tabs fixed to the spindle 27 and slidably engaged in respective longitudinal grooves of the external shaft 26, prevents the corresponding rotation between the spindle 27 and the boring bar 2 and transmits the rotation motion to the latter.

The hydrostatic supporting apparatus 5 further comprises hydrostatic supporting means 9 arranged for supporting the boring bar 2 hydrostatically by means of the fluid at a working pressure Pw.

The cylindrical cavity of the spindle 27 is provided with an internal wall 10 on which is mounted by interference the hydrostatic supporting means 9 that is provided with an external surface 23, which abuts, in particular, sealingly, on the internal wall 10.

The boring bar 2 and the spindle 27 are separated by an interspace 25.

In use, inside the interspace 25 the pressurised fluid is delivered that has to supply the hydrostatic supporting means 9 and coming from the tubular passage 15 with which the interspace 25 is flowingly connected. In particular, the interspace 25 is interposed between the internal wall 10 of the spindle 27, or an internal surface 37 of the hydrostatic supporting means 9, and an external wall 29 of the external shaft 26 and extends substantially over the entire length of the spindle means 6.

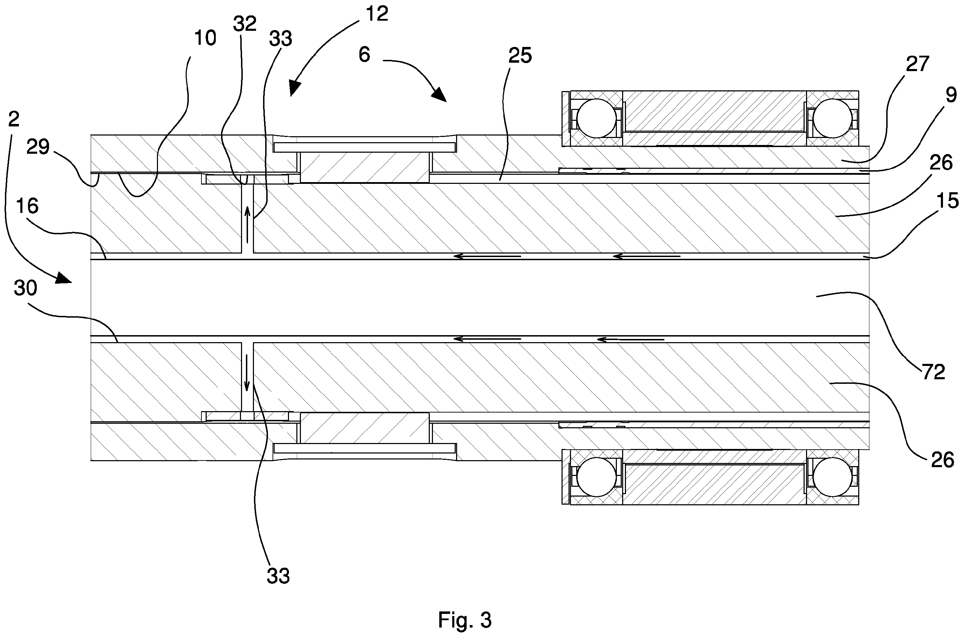

The hydrostatic supporting apparatus 5 further comprises a supply system 12, shown in Figures 2 and 3 and connected to fluid delivering means, not illustrated, for example a hydraulic pump, to supply the fluid at the supply pressure Pa to the hydrostatic supporting means 9 via the tubular passage 15 obtained inside the boring bar 2 and through the interspace 25.

With reference to Figure 2, the supply system 12 comprises manifold means 24 mounted on the boring bar 2, for example near the second end 4 thereof. The manifold means 24 comprises one or more inlet conduits 13 that place the fluid delivering means in flowing communication with the tubular passage 15 through a respective inlet hole 18.

Each inlet conduit 13 can be substantially perpendicular to the machining axis Z and can be made of a through hole obtained in the thickness of the manifold means 24 and in the thickness of the external shaft 26. Each inlet conduit 13 leads into the tubular passage 15 via the respective inlet hole 18.

The pressurised fluid is then supplied by the supply system 12 to the tubular passage 15 obtained between the internal shaft 72 and the external shaft 26 of the boring bar 2 through the inlet hole 18.

With reference to Figure 3, the supply system 12 further comprises one or more passage conduits 33 that connect the tubular passage 15 to the interspace 25 via respective passage holes 32, thus enabling the fluid to pass at the supply pressure Pa to the hydrostatic supporting means 9, which is in turn flowingly connected to the interspace 25.

The passage conduits 33 can be arranged substantially perpendicularly to the machining axis Z and can be arranged between the first end 3 and the second end 4.

Each passage conduit 33 can be made in the form of a through hole obtained in the thickness of the external shaft 26.

Owing to the supply system 12, in use, the fluid at the supply pressure Pa transits from the delivery means to the hydrostatic supporting means 9, passing successively through the inlet conduits 13, the tubular passage 15, the passage conduits 33 and the interspace 25, as indicated by the arrows of Figures 2 and 3 and as explained better below to supply the hydrostatic supporting means 9.

Further, owing to the supply system 12 that supplies the hydrostatic supporting means 9 with pressurised fluid through the tubular passage 15 inside the boring bar 2, the manifold means 24 has a reduced diameter compared with the manifold means of prior-art boring machine tools in which the pressurised fluid is supplied through the spindle means 6. In this manner, having a smaller diameter, at the same rotation speed there are lower peripheral speeds and it is thus possible to dimension the passages of the fluid and the clearance between the movable and fixed parts of the manifold means 24 so as to reduce the leaks of fluid and contain the generation of heat through friction.

The smaller dispersions of fluid enable fluid delivering means to be obtained for delivering fluid to the supply system 12 (comprising for example a hydraulic pump and a tank that are not illustrated) that are smaller and more compact than those of prior art boring machine tools.

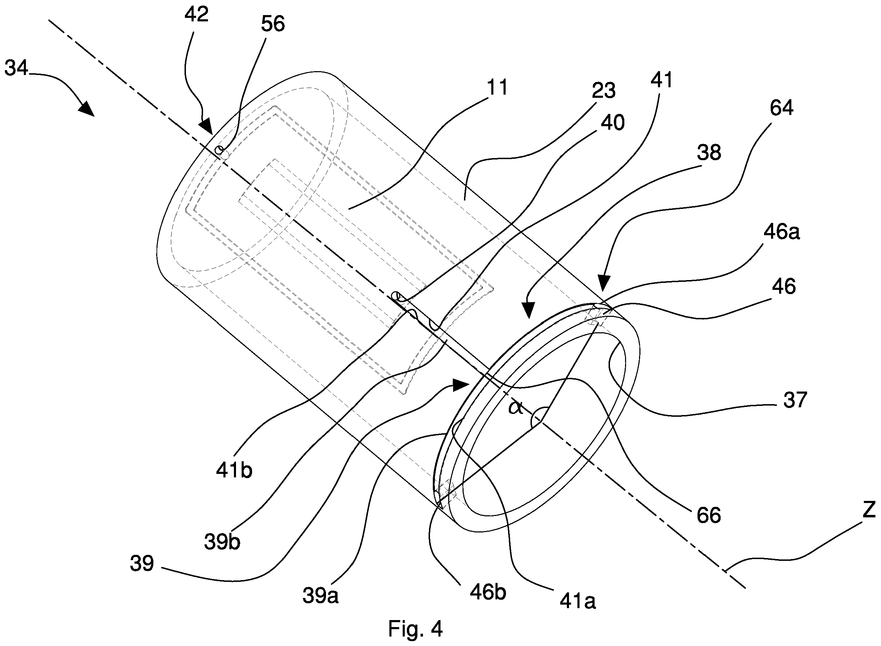

The hydrostatic supporting means 9 is provided with a plurality of hydrostatic supporting pockets 11 shown, in particular, in Figures 4 to 10 and 12 to 14 and supplied by the fluid at the working pressure Pw via hydraulic resistance supply means 64 for supporting the boring bar 2 along the machining axis Z.

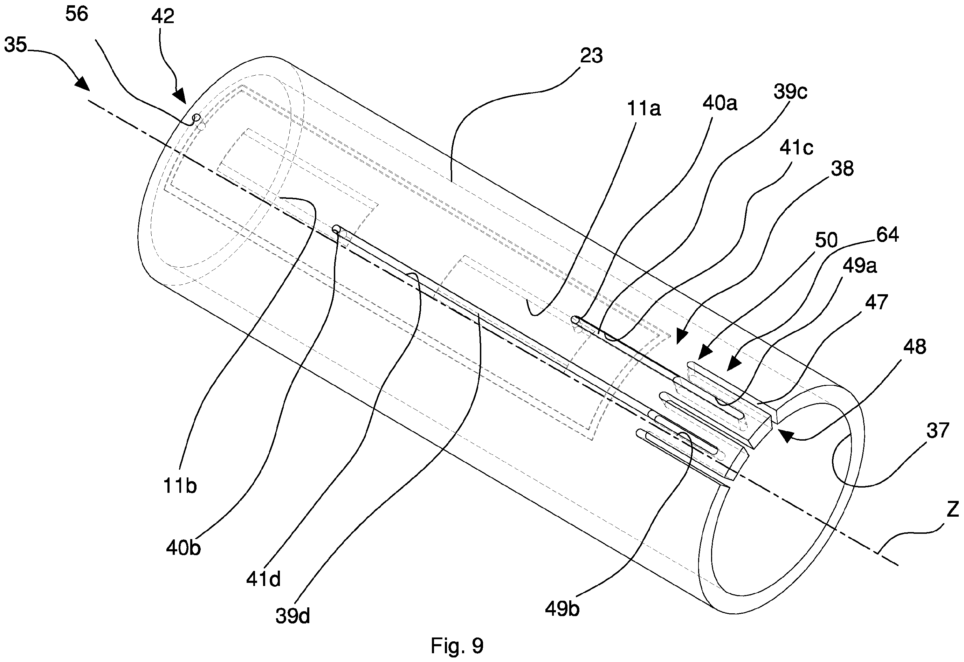

In fact, the plurality of hydrostatic supporting pockets 11, suitably supplied by the pressurised fluid, creates a film of fluid having a required thickness that is able to support the boring bar 2 suitably and stiffly, preventing undesired and harmful contacts between the internal surface 37 and the external wall 29 of the external shaft 26 of the boring bar 2. Each hydrostatic supporting pocket 11 is made on the internal surface 37 of the spindle means 6 and is delineated with a dashed line in Figure 4 and Figure 9. For the sake of clarity, in Figure 4 only one hydrostatic supporting pocket 11 is shown.

The hydrostatic supporting pockets 11 can be spaced angularly apart on the internal surface 37 and/or longitudinally spaced along a direction that is substantially parallel to the machining axis Z.

It should be noted that the manifold means 24 of the boring machine tool 1 according to the invention supplies all the hydrostatic supporting pockets 11 of the hydrostatic supporting apparatus 5 and dedicated manifold means is not necessary for each hydrostatic supporting pocket 11.

The hydrostatic supporting means 9 further comprises annular groove means 45 obtained on the internal surface 37, the annular groove means 45 being reached by the pressurised fluid coming from the interspace 25 at the supply pressure Pa. In particular, the annular groove means 45 is flowingly connected with the interspace 25.

In fact, the pressurised fluid passes from the interspace 25 to the annular groove means 45, at which the fluid leads at the supply pressure Pa.

The hydraulic supply resistance means 64 is arranged for varying the pressure of the fluid, in particular, hydraulic supply resistance means 64 is arranged for taking the fluid pressure from the supply pressure Pa, for example of 20 bar, to a set working pressure Pw, for example of 10 bar, where, in particular, the supply pressure Pa has a greater value than the working pressure Pw.

The hydraulic supply resistance means 64 creates an input hydraulic resistance to the passage of the pressurised fluid thereupon.

The hydraulic supply resistance means 64 comprises pocket supply means 46, 49 made on the internal surface 37 and flowingly connected with the plurality of hydrostatic supporting pockets 11 by pocket supply conduit means 38 of the hydraulic supply resistance means 64 to supply each hydrostatic supporting pocket 11 with the fluid at working pressure Pw. The hydraulic supply resistance means 64 further comprises a passage zone 59 defined by a portion of the internal surface 37 of the hydrostatic supporting means 9 and by the external wall 29 of the external shaft 26 and is supplied by the fluid at the supply pressure Pa by means of the annular groove means 45.

The passage zone 59 is arranged between the annular groove means 45 and the pocket supply means 46, 49.

The pocket supply means 46, 49 is supplied with the fluid through the passage zone 59, which acts as an inlet, i.e. supply, hydraulic resistance of the hydrostatic supporting means 9 such as to vary the pressure of the fluid from the supply pressure Pa to the working pressure Pw.

The passage zone 59 has, further, a height that is variable according to a radial position of the boring bar 2 and according to a work load applied thereto.

In fact, a variation of the radial position of the boring bar 2 entails a variation of the thickness of the film of fluid in the passage zone 59, so the inlet hydraulic resistance varies consequently that depends on the thickness of the passage zone 59.

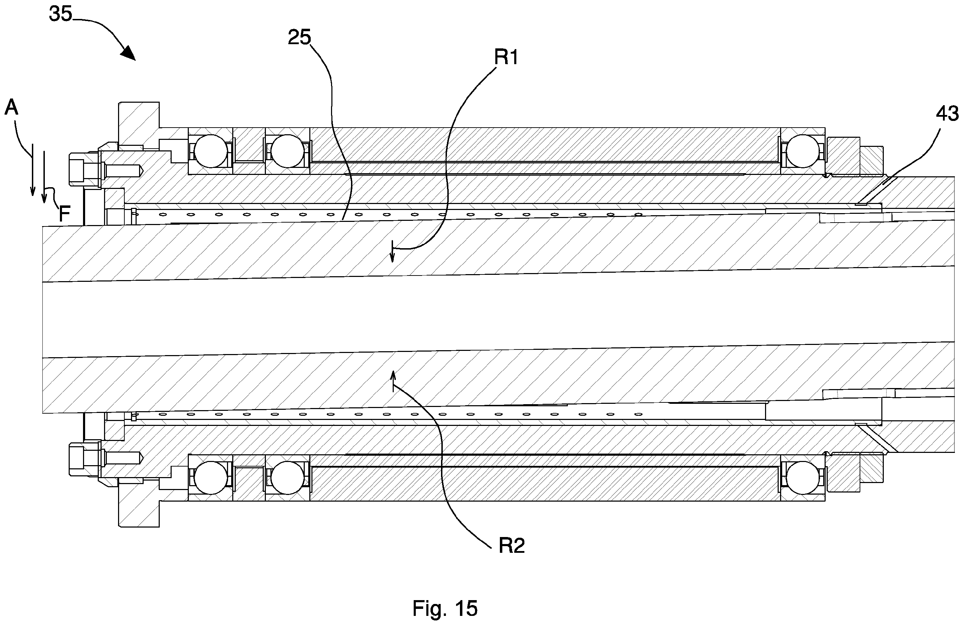

As shown in Figure 15, in fact, when a force F that simulates a work load, indicated by an arrow, is applied to the boring bar 2, for example substantially perpendicularly to the machining axis Z and at an application area A, the boring bar 2 undergoes flexure and/or bending that causes a tilt thereof. This tilt alters the position of the boring bar 2 inside the spindle means 6 and means that the thickness of the film of pressurised fluid is no longer constant along the machining axis Z as in the static case in which no force is applied to the boring bar 2.

It should be noted that the variation in the thickness of the film of pressurised fluid is obtained along the machining axis Z, i.e. along the longitudinal extent of the internal surface 37 of the hydrostatic supporting means 9, but also circumferally, i.e. along the angular extent of the internal surface 37 of the hydrostatic supporting means 9.

The pocket supply conduit means 38 is interposed between the pocket supply means 46, 49 and the hydrostatic supporting pockets 11.

The pocket supply conduit means 38 comprises one or more supply conduits 39 made on the external surface 23 of the hydrostatic supporting means 9.

Each supply conduit 39 comprises, in particular, a groove 41 made for mechanical processing on the external surface 23 of the hydrostatic supporting means 9 and closed, in particular sealingly, above, by the internal wall 10 of the spindle 27.

The supply conduits 39 lead into a respective hydrostatic supporting pocket 11 via a discharge hole 40.

The supply conduits 39 thus connect a hydrostatic supporting pocket 11 to the pocket supply means 46, 49 supplied by the fluid at the working pressure Pw.

The hydrostatic supporting means 9 further comprises discharging means 42 arranged for collecting the fluid at the working pressure Pw that exits the hydrostatic supporting pocket 11 and conveying the fluid outside the spindle means 6 via outlet channels 43 of the discharging means 42.

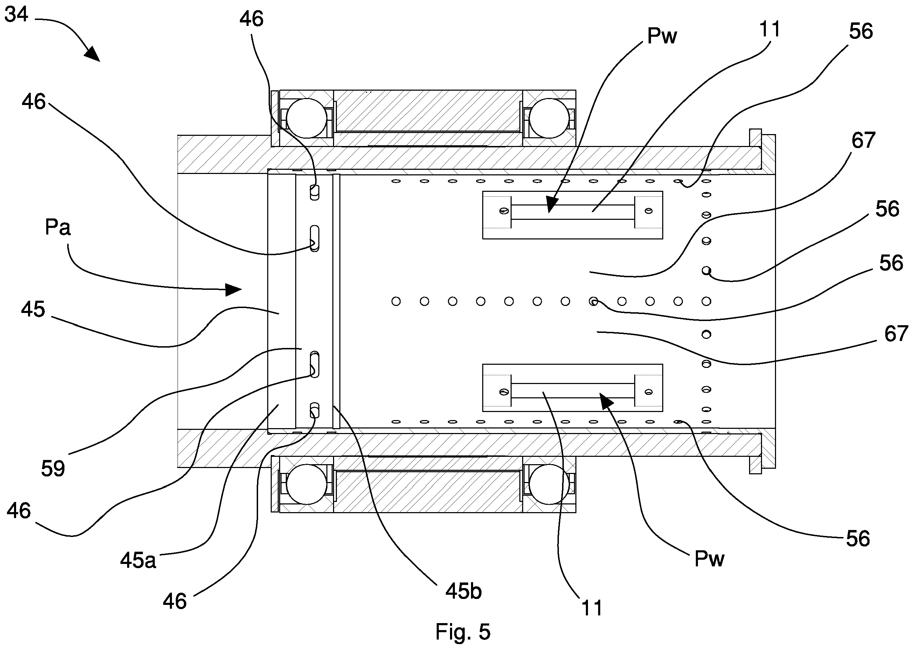

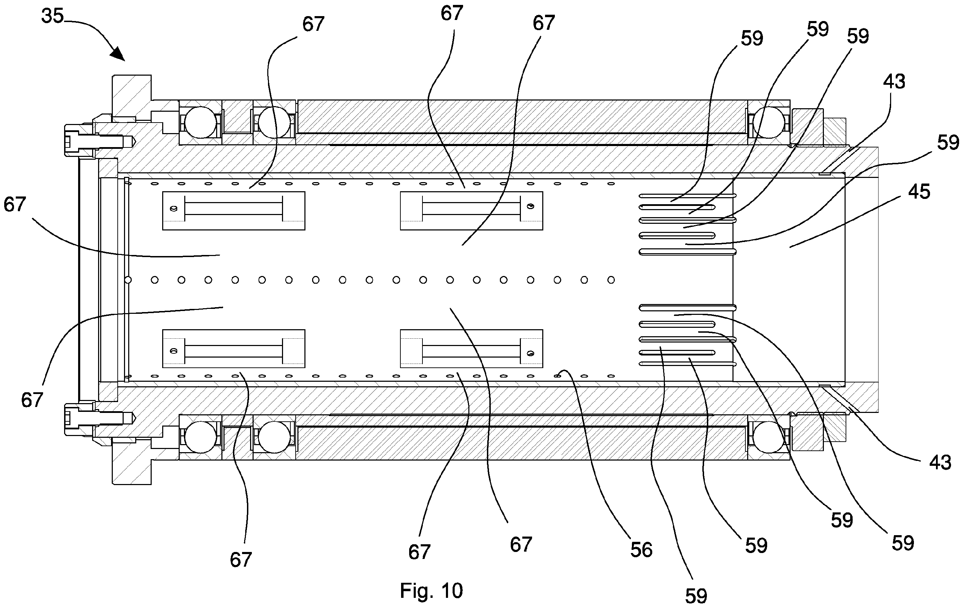

The discharging means 42 comprises a plurality of through openings 56, shown in particular in Figures 5 and 10, in particular arranged aligned in groups.

Still in particular, each group of through openings 56 is interposed between adjacent hydrostatic supporting pockets 11.

The through openings 56 of the same group are joined by longitudinal discharge grooves 44 of the discharging means 42 made on the external surface 23 and connected to annular discharge grooves 57 flowingly connected with the outlet channels 43.

A further passage zone 67, comprising a transverse zone interposed between the hydrostatic supporting pockets 11 and the through openings 56, is defined by a portion of the internal surface 37 of the hydrostatic supporting means 9 and by the external wall 29 of the external shaft 26, and is supplied by the fluid at the working pressure Pw that exits the hydrostatic supporting pockets 11.

In use, the pressurised fluid exits the hydrostatic supporting pockets 11 spreading on the internal surface 37 and then flows into the through openings 56.

The through openings 56 are then supplied with the fluid through the further passage zone 67, which acts as an outlet, i.e. discharge, hydraulic resistance of the hydrostatic supporting means 9 that is such as to vary the pressure of the fluid from the working pressure Pw to an outlet pressure Pout. The outlet pressure Pout is generally 0 bar.

Also the further passage zone 67 has a height that varies according to a radial position of the boring bar 2 according to a work load applied thereto just like the passage zone 59.

A variation of the radial position of the boring bar 2 entails a variation in the thickness of the film of fluid in the further passage zone 67, so that the outlet hydraulic resistance varies accordingly, which depends on the thickness of the film of fluid in the further passage zone 67. Thus the working pressure Pw of the fluid varies.

The longitudinal discharge grooves 44 and the radial discharge grooves 57 are made on the external surface 23 and are closed, in particular sealingly, above by the internal wall 10 of the spindle means 6.

The hydrostatic supporting means 9 comprises first hydrostatic supporting means 34, which can be arranged near the second end 4 of the boring bar 2 and shown, in particular, in Figures 4 to 8, and second hydrostatic supporting means 35, which can be arranged further from said second end 4 with respect to the first hydrostatic supporting means 34 and shown, in particular, in Figures 9 to 14. The second hydrostatic supporting means 35 is thus interposed between the first end 3 and the first hydrostatic supporting means 34. In particular, Figures 4 and 9 are simplified partial perspective views respectively of the first hydrostatic supporting means 34 and of the second hydrostatic supporting means 35 in configurations dismantled from the boring machine tool 1 to enable the components thereof to be identified more clearly.

In one embodiment that is not illustrated, the second hydrostatic supporting means 35 can be arranged near the second end 4 of the boring bar 2 and the first hydrostatic supporting means 34 can be arranged further from said second end 4 with respect to the second hydrostatic supporting means 35.

Subsequently, similar parts in terms of structure and function of the first hydrostatic supporting means 34 and of the second hydrostatic supporting means 35 will be indicated in the description and in the drawings by the same reference numbers.

The first hydrostatic supporting means 34 and the second hydrostatic supporting means 35 can be arranged on opposite sides with respect to the passage conduits 33.

The first hydrostatic supporting means 34 and the second hydrostatic supporting means 35 can each be made in the shape of a brass. In this case, the internal surface 37 of the hydrostatic supporting means 9 is the internal surface 37 of each brass and has a substantially cylindrical shape. In the same manner, the external surface 23 of the hydrostatic supporting means 9 is the external surface 23 of each brass and also has a substantially cylindrical shape.

With reference to Figures 4 to 8, the first hydrostatic supporting means 34 comprises a plurality of hydrostatic supporting pockets 11 spaced angularly apart on the internal surface 37 around the axis Z.

In particular, there are at least three hydrostatic supporting pockets 11.

The pocket supply means of the first hydrostatic supporting means 34 comprises a plurality of supply slots 46, in particular, at least one pair of supply slots 46a, 46b arranged offset, in particular, spaced angularly apart by a displacement angle α, for example equal to 180°, to supply the same hydrostatic supporting pocket 11. Each supply slot of the pair of supply slots 46a, 46b is arranged on opposite sides with respect to the hydrostatic supporting pocket 11, which supplies, in particular, at an angular distance equal to substantially half the displacement angle α, i.e. in the case of a displacement angle α equal to 180°, equal to 90°.

The hydrostatic supporting pockets 11, as said, are arranged spaced angularly apart on the internal surface 37 and each hydrostatic supporting pocket 11 is supplied by a respective pair of supply slots 46a, 46b.

The supply slots 46 of the first hydrostatic supporting means 34 can be spaced angularly apart on the internal surface 37.

The supply conduits 39 of the first hydrostatic supporting means 34 comprises a semicircular supply conduit 39a provided with a semicircular groove 41a that extends circumferally over the external surface 23 and a longitudinal supply conduit 39b provided with a longitudinal groove 41b that extends on the external surface 23 along a direction substantially parallel to the machining axis Z and is substantially perpendicular to the semicircular supply conduit 39a. In particular, the longitudinal supply conduit 39b is connected to the semicircular supply conduit 39a substantially at a median zone of the semicircular supply conduit 39a via a connecting hole 66. The pressurised fluid is supplied to the semicircular supply conduit 39a from the pair of supply slots 46a, 46b that are offset by the displacement angle α.

The longitudinal supply conduit 39b leads into the hydrostatic supporting pocket 11 via the discharge hole 40.

Consequently, the hydrostatic supporting pocket 11 is supplied by the fluid at the working pressure Pw via a pair of supply slots 46a, 46b offset by the displacement angle α. In particular, the supply slots 46a, 46b of a pair of supply slots are offset by about 90° with respect to the hydrostatic supporting pocket 11 which supply with pressurised fluid. An angular distance of about 90° of each supply slot 46a, 46b of a pair of supply slots with respect to the position of the hydrostatic supporting pocket 11 which supply makes the inlet hydraulic resistance almost independent of the film of fluid that is created between the hydrostatic supporting means 9 and the boring bar 2.

In the case of the first hydrostatic supporting means 34, the passage zone 59 comprises a circumferal zone of substantially annular shape interposed between the annular groove means 45 and the supply slots 46.

In addition, in the case of the first hydrostatic supporting means 34, the annular groove means 45 can comprise a pair of annular grooves 45a, 45b, arranged on opposite sides with respect to the supply slots 46.

The inlet hydraulic resistance of the first hydrostatic supporting means 34 is achieved by the passage of the fluid at the supply pressure Pa on the passage zone 59 to reach the semicircular supply conduit 39a. As disclosed previously, the inlet hydraulic resistance of the first hydrostatic supporting means 34 is determined by the passage of the fluid from the annular groove means 45 to the passage zone 59. The fluid thus reaches the hydrostatic supporting pocket 11 at the working pressure Pw that is different from the supply pressure Pa.

In particular, the value of the inlet hydraulic resistance of the first hydrostatic supporting means 34 is given by the combination of the two inlet hydraulic resistances that occur at the passage of the fluid respectively through each supply slot 46a, 46b of the pair of offset supply slots 46 which supply a single hydrostatic supporting pocket 11. Such hydraulic inlet resistances depend on the thickness of the film of pressurised fluid that is created at different portions of the passage zone 59 and is variable according to the work load applied to the boring bar 2. Nevertheless, as explained previously, the effect of the work load on the boring bar 2 is different along the extent of the passage zone 59, which entails a different thickness of the pressurised fluid at the circumference thereof.

In particular, each inlet hydraulic resistance varies according to the distance of the portions of passage zones 59 from the application area A and according to the positions thereof with respect to the machining axis Z. In particular, the film of fluid that is created at a portion of passage zone 59 which supplies a first supply slot 46a positioned above the machining axis Z will have less thickness than the film of pressurised fluid that is created at a further portion of passage zone 59 which supplies a second supply slot 46b positioned below the machining axis Z i.e. spaced apart angularly by the displacement angle α, in particular by 180°, when a work load as in Figure 15 is applied to the boring bar 2.

Thus the value of the flowrate of the fluid that enters the first supply slot 46a decreases with respect to the corresponding value in the absence of work load, whereas the value of the flowrate of the fluid that enters the second supply slot 46b increases with respect to the corresponding value in the absence of work load.

This means that the values of the hydraulic resistances (and correspondingly of the pressures) due to the fluid that traverses supply slots 46 spaced apart angularly by the displacement angle α in the case of a load applied to the boring bar 2 are counterbalanced and the combination thereof will be substantially the same if no work load is applied to the boring bar 2.

The effect that is obtained is consequently that the inlet hydraulic resistance of the first hydrostatic supporting means 34 has a value that is almost independent of the film of fluid as each hydrostatic supporting pocket 11 of the first hydrostatic supporting means 34 is supplied by a pair of supply slots 46 offset by the displacement angle α.

With reference to Figures 9 to 14, the second hydrostatic supporting means 35 comprises a plurality of hydrostatic supporting pockets 11 spaced angularly apart on the internal surface 37, in particular, at least three hydrostatic supporting pockets 11. In Figures 9 to 14 an embodiment of the second hydrostatic supporting means 35 is shown in which the hydrostatic supporting pockets 11 are arranged in reciprocally aligned pairs along a direction substantially parallel to the machining axis Z. In Figure 9 there is shown, for the sake of clarity, only one pair of the hydrostatic supporting pockets 11a, 11b that are longitudinally aligned reciprocally.

In the embodiment shown in Figure 9, the supply conduits 39 of the second hydrostatic supporting means 35 comprise a first longitudinal supply conduit 39c provided with a first longitudinal groove 41c obtained on the external surface 23 and which extends along a direction substantially parallel to the machining axis Z and a second longitudinal supply conduit 39d provided with a second longitudinal groove 41d obtained on the external surface 23 and which extends along a direction substantially parallel to the machining axis Z.

The first longitudinal supply conduit 39c and the second longitudinal supply conduit 39d each supply a respective hydrostatic supporting pocket 11 of the pair of hydrostatic supporting pockets 11a, 11b of the second hydrostatic supporting means 35. In particular, with reference to the embodiment shown in Figure 9, the first longitudinal supply conduit 39c leads into a first hydrostatic supporting pocket 11a via a first discharge hole 40a, whereas the second longitudinal supply conduit 39d leads into a second hydrostatic supporting pocket 11b via a second discharge hole 40b, said second hydrostatic supporting pocket 11b being aligned along a direction substantially parallel to the machining axis Z with the first hydrostatic supporting pocket 11a.

In addition, in the case of the second hydrostatic supporting means 35, each hydrostatic supporting pocket 11 is arranged in the same angular sector of the respective supply conduits 39 that supply the hydrostatic supporting pocket 11 in such a manner that, following flexure and/or bending of the boring bar 2, an increase in the height of the passage zone 59 is matched by a decrease in the height of the corresponding further passage zone 67 and vice versa.

The pocket supply means of the second hydrostatic supporting means 35 comprises one or more lesser through channels 49, in particular, a pair of lesser through channels 49a, 49b each obtained in the thickness of the second hydrostatic supporting means 35. Each lesser through channel 49 can have a longitudinal extent, i.e. be substantially parallel to the machining axis Z.

The lesser through channels 49 are reciprocally parallel and spaced angularly apart on the internal surface 37.

Each lesser through channel 49 is flowingly connected, at a respective end zone 51 thereof, to a respective supply conduit 39. A further end zone 53 of each lesser through channel 49, opposite the end zone 51 is blind.

The pocket supply means of the second hydrostatic supporting means 35 further comprises one or more greater through channels 47, each obtained in the thickness of the second hydrostatic supporting means 35 and connected at a respective end part 48 to the interspace 25 from which the fluid comes at the supply pressure Pa through the annular groove 45. A further end part 50 of each greater through channel 47, opposite the end part 48, is blind. Each greater through channel 47 can have a longitudinal extent, i.e. be substantially parallel to the machining axis Z.

In the case of several greater through channels 47, they can be reciprocally parallel and spaced angularly apart from one another on the internal surface 37.

Each lesser through channel 49 is placed next to each greater through channel 47. In particular, in the illustrated embodiment, each lesser through channel 49 is interposed between each greater through channel 47. In this manner each lesser through channel 49 receives a quantity of pressurised fluid coming from the two respective greater through channels 47 adjacent thereto.

The pressurised fluid in use passes from the greater through channels 47 to the lesser through channels 49 through the passage zone 59.

In the case of the second hydrostatic supporting means 35, the passage zone 59 thus comprises a transverse zone interposed between a greater through channel 47 and the lesser adjacent through channel 49.

In the case of the second hydrostatic supporting means 35 the inlet hydraulic resistance is achieved, in particular, by the passage of the fluid at the supply pressure Pa on the passage zone 59 to reach via the passage zone 59 the lesser through channels 49. In particular, the inlet hydraulic resistance of the second hydrostatic supporting means 35 is determined by the passage of the fluid from the greater through channels 47, where the fluid has a pressure equal to the supply pressure Pa, to the lesser through channels 49 passing on the passage zone 59.

Consequently, the fluid passes into the greater through channels 47 and, from here to the hydrostatic pockets 11, at a working pressure Pw that is different from the supply pressure Pa.

In particular, the value of the inlet hydraulic resistance of the second hydrostatic supporting means 35 is given by the combination of the two inlet hydraulic resistances that occur at the passage of the fluid respectively through each lesser through channel 47, which supplies a single hydrostatic supporting pocket 11. These inlet hydraulic resistances depend on the thickness of the film of pressurised fluid that is created at different portions of the passage zone 59 and is variable according to the work load applied to the boring bar 2. Nevertheless, again, the effect of the work load on the boring bar 2 is different along the extent of the passage zone 59, which entails a different thickness of the pressurised fluid at the passage zone 59 circumferally.

Unlike the first hydrostatic supporting means 34, in this case, each hydrostatic product 11 is supplied by only one respective supply conduit 39 arranged with the corresponding through channels 47, 49 and the relative passage zone 59 substantially aligned thereupon in a longitudinal direction and thus in the same angular sector. Consequently, each hydrostatic supporting pocket 11 is supplied via a hydraulic resistance substantially aligned thereupon and varies according to the thickness of the film of fluid that traverses a portion of the passage zone 59. It should be noted that in this manner if owing to different dimensional machining tolerances of the external wall 29 of the boring bar 2 and of the internal wall 37 of the hydrostatic supporting means 9 the clearance between the aforesaid walls increases or decreases, the same variation will be obtained in the thickness of the film (in operation and in the absence of a work load) at each hydrostatic supporting pocket 11 and at the passage zone 59. Such same variation in the thickness of the film causes a resulting variation in the hydraulic resistance at the inlet and outlet of the hydrostatic supporting pocket 11 with the result that the working pressure Pw there inside is maintained substantially constant and equal to an optimum working pressure of the boring machine tool 1.

In an alternative embodiment that is not illustrated, the supply conduits 39, with the corresponding through channels 47, 49 and the relative passage zone 59, can be arranged in a different angular sector with respect to the hydrostatic supporting pockets 11 which supply.

The operation of the boring machine tool 1 will be disclosed below.

When it is necessary to perform a machining task on a workpiece, a suitable tool is mounted at the first end 3 of the boring bar 2.

During the operation of the boring machine tool 1 the boring bar 2 is moved along the machining axis Z and rotated around the machining axis Z, supported hydrostatically by the hydrostatic supporting apparatus 5.

For this purpose, a fluid coming from the delivery means is conveyed at a set supply pressure Pa to the supply system 12 of the boring machine tool 1 to supply the hydrostatic supporting means 9 via the manifold means 24.

As illustrated by the arrows in Figures 2 and 3, the path that the fluid travels at the supply pressure Pa to reach the first hydrostatic supporting means 34 and the second hydrostatic supporting means 35 starts from the delivery means from which it comes and from the latter, through the manifold means 24, the fluid is conveyed to the inlet conduits 13, and the fluid then leads into the tubular passage 15 via the inlet hole 18.

The fluid fills the tubular passage 15 being distributed between the outer face 16 of the internal shaft 72 and the internal face 30 of the external shaft 26.

Through the passage conduits 33, the fluid at the supply pressure Pa reaches, further, the interspace 25, filling the interspace 25 and being thus distributed between the outer face 29 of the external shaft 26 and the internal wall 10 of the spindle 27.

The interspace 25 is flowingly connected to the hydrostatic supporting means 9, thus the pressurised fluid can reach the first hydrostatic supporting means 34 and the second hydrostatic supporting means 35 through the interspace 25.

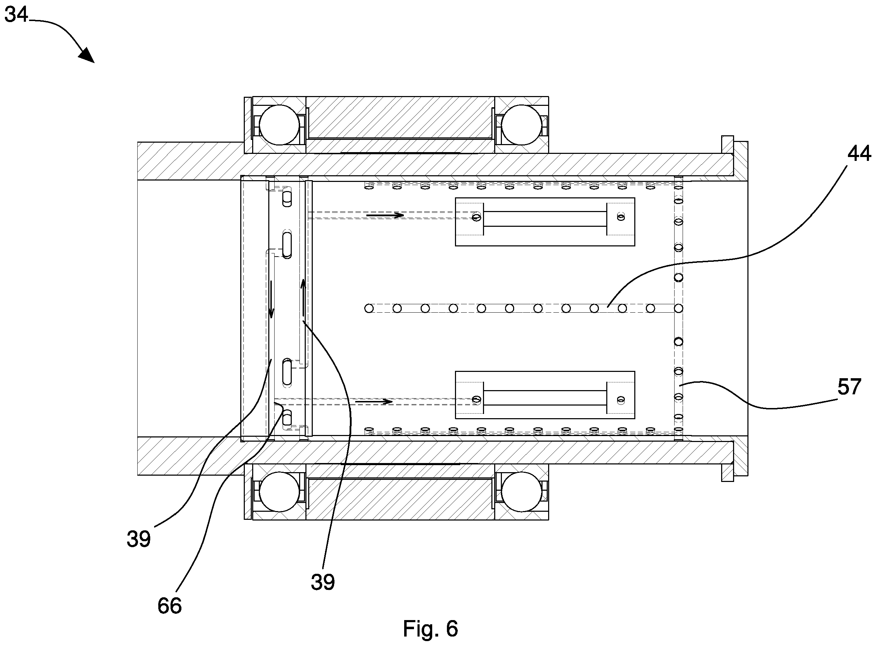

With reference to Figure 5, the pressurised fluid reaches the annular groove 45 of the first hydrostatic supporting means 34 and leads onto the passage zone 59, creating the inlet hydraulic resistance of the first hydrostatic supporting means 34. Thereafter, the fluid goes past the pocket supply means and, in particular, the supply slots 46 of the first hydrostatic supporting means 34 and reaches the external surface 23 leading into the supply conduits 39 obtained thereupon. The hydrostatic supporting pockets 11 of the first hydrostatic supporting means 34 are then supplied by the pressurised fluid through the supply conduits 39 (as indicated by the arrows in Figure 6) that in fact create a film of fluid having a requested thickness that is able to support the boring bar 2 suitably and stiffly. In Figures 5 to 8 the first hydrostatic supporting means 34 is shown, provided with a plurality of hydrostatic supporting pockets 11. In particular, for example in Figure 6, a section is shown of the first hydrostatic supporting means 34 taken along a plane that is perpendicular to the machining axis Z that highlights the presence of two hydrostatic supporting pockets 11. Another two will be present on the opposite section of the first hydrostatic supporting means 34 not shown in Figure 6. Each of the hydrostatic supporting pockets 11 is supplied, as disclosed previously, by a pair of supply conduits 39 that each receive the pressurised fluid from a respective supply slot 46, the two supply slots 46 being angularly displaced by the displacement angle α.

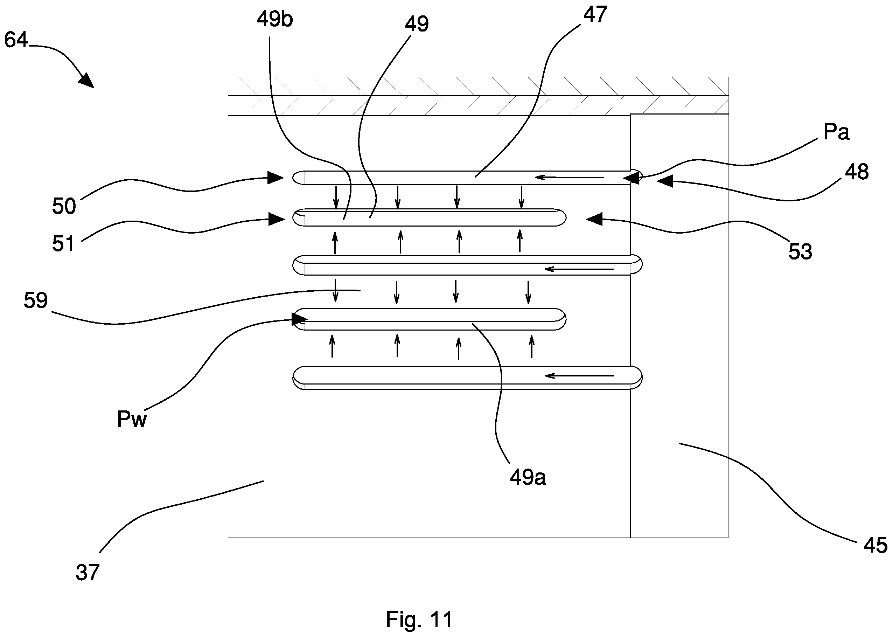

Simultaneously to the first hydrostatic supporting means 34 being supplied, also the second hydrostatic supporting means 35 is supplied. With reference to Figures 10 and 11, the pressurised fluid reaches the greater through channels 47 of the second hydrostatic supporting means 35 and leads onto the passage zone 59. Thereafter, the fluid traverses the passage zone 59, creating the inlet hydraulic resistance of the second hydrostatic supporting means 35 and leads into the lesser through channels 49. Owing to the latter, the fluid reaches outside the second hydrostatic supporting means 35, where it leads into the supply conduits 39 made on the external surface 23.

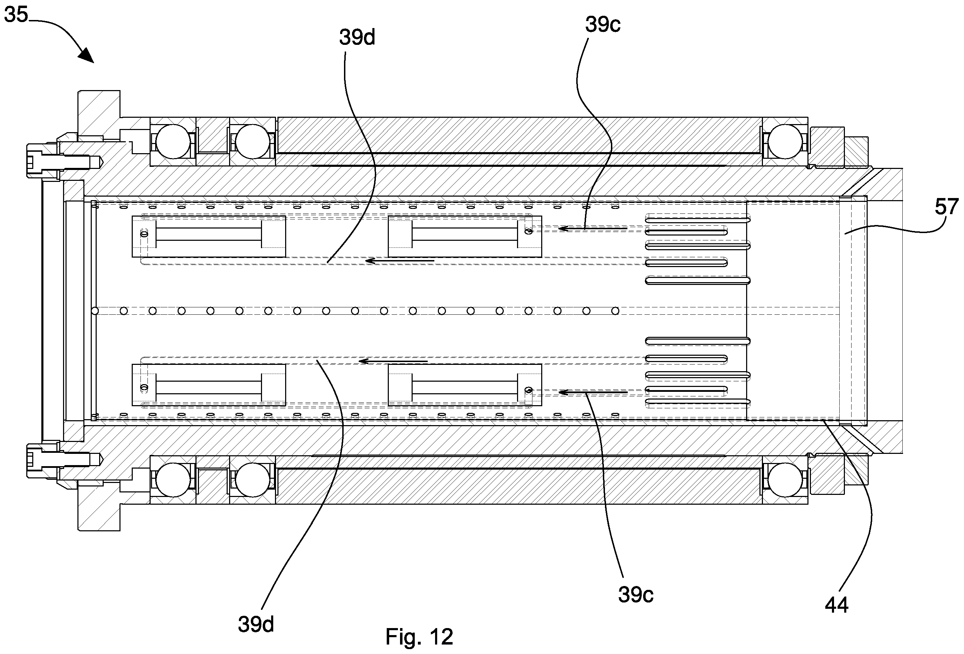

The hydrostatic supporting pockets 11 of the second hydrostatic supporting means 35 are then supplied by the pressurised fluid via the supply conduits 39 (as indicated by the arrows in Figure 12) which create also in this case a film of fluid having a required thickness that is able to support the boring bar 2 suitably and stiffly.

In Figures 10 and 12 to 14 the second hydrostatic supporting means 35 is shown that is provided with a plurality of pairs of the hydrostatic supporting pockets 11. In particular, for example in Figure 12, there is shown a section of the second hydrostatic supporting means 35 taken along a plane that is perpendicular to the machining axis Z that highlights the presence of two pairs of hydrostatic supporting pockets 11. Another two will be present on the opposite section of the second hydrostatic supporting means 35 not shown in Figure 12. Each pair of the hydrostatic supporting pockets 11 is supplied, as disclosed previously, by a lesser through channel 49.

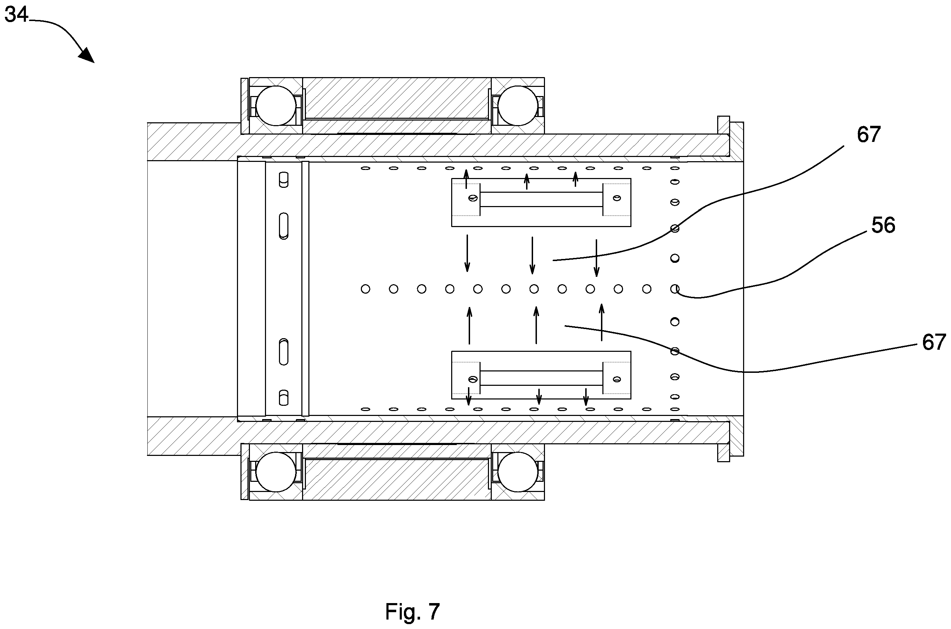

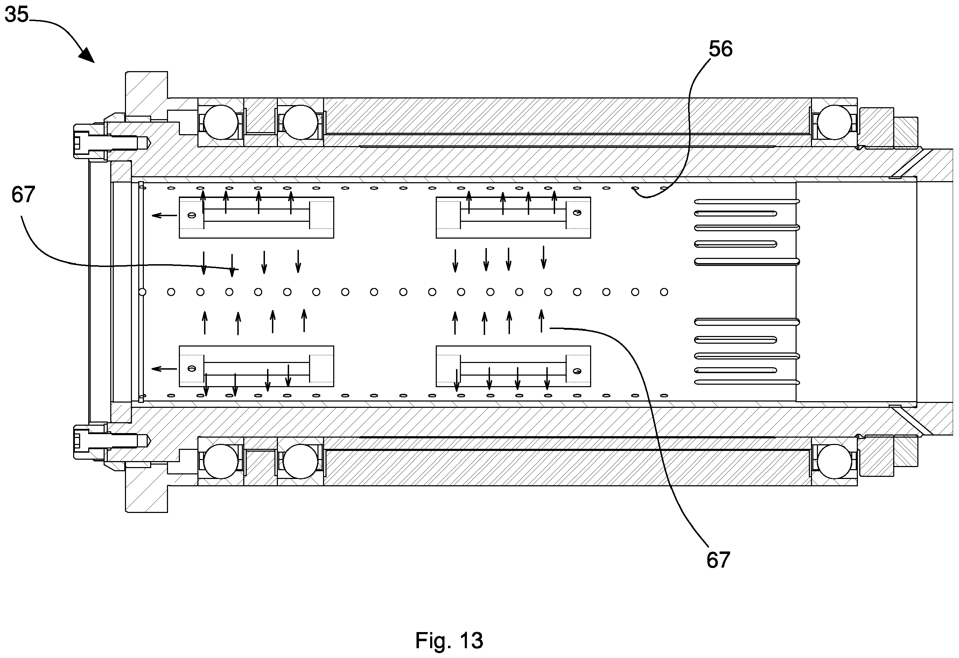

With reference to Figures 7 and 13, which respectively show a section of the first hydrostatic supporting means 34 and a section of the second hydrostatic supporting means 35, the pressurised fluid that exits the hydrostatic supporting pockets 11 is conveyed outside the hydrostatic supporting means 9 through the through openings 56 from which it leads into the longitudinal discharge grooves 44. The passage of the pressurised fluid from the hydrostatic supporting pockets 11 to the through openings 56 through the internal surface 37 creates an outlet hydraulic resistance respectively of the first hydrostatic supporting means 34 and of the second hydrostatic supporting means 35.

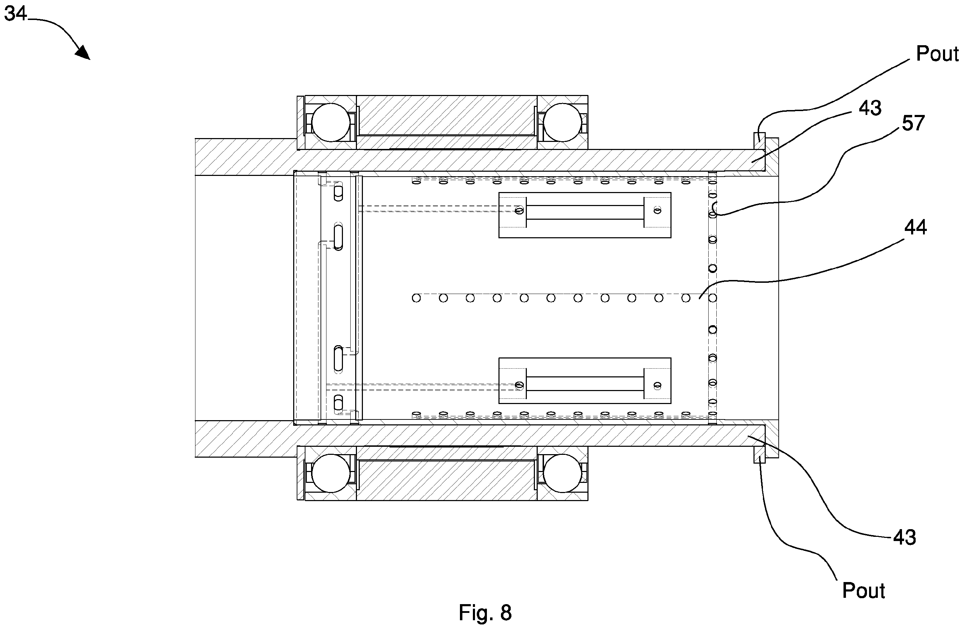

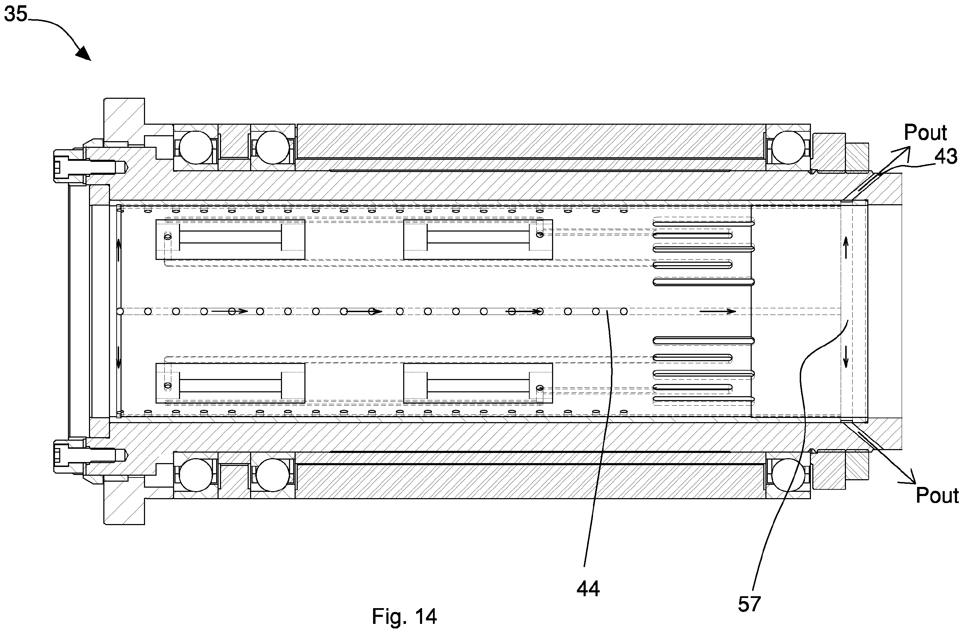

The radial discharge grooves 57 lastly convey the fluid to the outlet channels 43, which lead outside the spindle 27 (as indicated by the arrows in Figures 8 and 14).

The film of fluid that is formed between the internal surface 37 of the hydrostatic support means 9 and the external wall 29 of the boring bar 2 during the operation prevents direct contact between the hydrostatic support means 9 and the boring bar 2 and thus enables the risk of damage through friction and wear to the aforesaid surface and to the aforesaid wall to be decreased.

Owing to the inlet and outlet hydraulic resistances of the hydrostatic support means 9 that vary according to movements and deformation that depend on the load applied to the boring bar 2 and to the forces that entail flexure and/or bending thereupon, the boring machine tool 1 that is the object of the present invention has greater stiffness in operation, which ensures better efficiency and efficacy during operation, in particular in the case of load imbalances that occur on the boring bar 2 with respect to boring machines of known type.

In fact, taking into consideration Figure 15, which shows a partial section of the second hydrostatic supporting means 35 when the boring bar 2 flexes, for example downwards, because of being subjected to a load at the first end 3 thereof, it is observed that the height of the passage zone 59, i.e. the thickness of the film of pressurised fluid at the hydraulic supply resistance means 64 positioned above the machining axis Z decreases and, consequently, the upper inlet hydraulic resistance increases. On the other hand, the height of the further passage zone 67, i.e. the thickness of the film of pressurised fluid at the internal surface 37 from which the pressurised fluid passes that exits by a pair of hydrostatic supporting pockets 11 that are positioned above the machining axis Z, increases and, consequently, the upper outlet hydraulic resistance decreases. Thus the working pressure Pw decreases in the hydrostatic supporting pockets 11 positioned above the machining axis Z, this causing a decrease in the force of reaction R1. This decrease in pressure and thus of the force of reaction R1 is greater than what is obtained in the prior-art boring machine tools in which the inlet resistance is fixed.

At the same time, considering the part of the second hydrostatic supporting means 35 below the machining axis Z in Figure 15, it is observed that the passage zone 59, i.e. the thickness of the film of pressurised fluid at the hydraulic supply resistance means 64 positioned below the machining axis Z, increases and, consequently, the lower inlet hydraulic resistance decreases. On the other hand, the height of the further passage zone 67, i.e. the thickness of the film of pressurised fluid at the internal surface 37 from which the pressurised fluid passes that exits from a pair of hydrostatic supporting pockets 11 positioned below the machining axis Z, decreases and, consequently, the upper outlet hydraulic resistance increases.

Consequently, the working pressure Pw in the hydrostatic supporting pockets 11 positioned below the machining axis Z increases, this causing an increase in the force of reaction R2. This increase in pressure and thus in the force of reaction R2 is greater than that that is obtained in prior-art boring machine tools in which the inlet resistance is fixed. In the first hydrostatic supporting means 34 the inlet hydraulic resistance can be made independent of the gap of the pressurised fluid supplying a hydrostatic supporting pocket 11 with supply slots 46 that are phase displaced angularly, for example by an angle of 180°, and are arranged offset by about half the displacement angle α with respect to the hydrostatic supporting pocket 11 which supply, for example at an angular distance of 90°. The resultant of the two reaction forces R1 and R2 balances the force that caused the flexure and/or bending of the boring bar 2 more stiffly compared with known boring machine tools.

The hydrostatic supporting apparatus 5 applied to the boring machine tool 1 thus enables the boring bar 2 to be supported precisely and stiffly both during rotation and translation, and the load imbalances applied to the boring bar 2 to be counterbalanced effectively.

In addition, the boring machine tool 1 according to the invention enables a single inlet manifold to be used to supply the pressurised fluid and does not require dedicated manifolds to be provided for each hydrostatic supporting pocket, or groups of hydrostatic supporting pockets that a resistance supplies as in prior-art boring machine tools in which the inlet pressure is fixed. This makes the supply circuit simpler than in prior-art supply circuits and entails small losses of supply fluid.

It is observed that the supply system according to what has been disclosed can also be applied to boring machine tools in which the hydraulic resistances are made in a known manner, for example in the shape of thin tubes or channels.

Also, in the boring machine tool 1 according to the invention, as the hydraulic inlet resistances are variable according to the film of fluid between the boring bar 2 and the hydrostatic supporting means 9, the supply pressure of the hydrostatic pockets does not depend on the machining tolerances of the boring bar 2 and of the hydrostatic supporting means 9.

## Claims

1. Boring machine tool (1) arranged for performing a boring task on a workpiece and provided with a machining axis (Z), said boring machine tool (1) comprising:
- a boring bar (2) arranged for supporting at a first end (3) thereof a working tool;
- a hydrostatic supporting apparatus (5) arranged for slidably and rotatably supporting said boring bar (2) comprising spindle means (6), rotatably fixed to connecting means of said boring machine tool (1), and hydrostatic supporting means (9), mounted inside said spindle means (6) and comprising an internal surface (37) provided with a plurality of hydrostatic supporting pockets (11; 11a, 11b) facing an external wall (29) of said boring bar (2) to support the latter, each hydrostatic supporting pocket (11; 11 a, 11b) of said plurality of hydrostatic supporting pockets (11; 11a, 11b) being supplied with a fluid at a working pressure (Pw);
- a supply system (12) arranged for supplying said fluid at a supply pressure (Pa) to said hydrostatic supporting means (9);
said boring machine tool (1) being **characterised in that** said supply system (12) comprises manifold means (24) mounted on said boring bar (2) and arranged for conveying said fluid to said hydrostatic supporting means (9) via a tubular passage (15) obtained inside said boring bar (2).

2. Boring machine tool (1) according to claim 1, wherein said boring bar (2) comprises an external shaft (26) comprising a cylindrical opening arranged for housing an internal shaft (72) of said boring bar (2), said external shaft (26) and said internal shaft (72) being mounted in such a manner that an internal face (30) of said external shaft (26) and an external face (16) of said internal shaft (72) are separated by said tubular passage (15).

3. Boring machine tool (1) according to claim 2, wherein said manifold means (24) comprises one or more inlet conduits (13) made in the form of through holes obtained in the thickness of said manifold means (24) and of said external shaft (26) for supplying said fluid to said tubular passage (15).

4. Boring machine tool (1) according to claim 2 or 3, wherein said supply system (12) further comprises one or more passage conduits (33) arranged for connecting said tubular passage (15) to said hydrostatic supporting means (9) by respective passage holes (32) and made in the form of through holes obtained in the thickness of said external shaft (26).

5. Boring machine tool (1) according to any preceding claim, wherein said manifold means (24) is mounted on said boring bar (2) at a second end (4) thereof opposite said first end (3).

6. Boring machine tool (1) according to any preceding claim, wherein said plurality of hydrostatic supporting pockets (11; 11a, 11b) is supplied with said fluid at said working pressure (Pw) via hydraulic supply resistance means (64) that achieves hydraulic inlet resistance to the passage of said fluid and comprises pocket supply means (46, 49) made on said internal surface (37), flowingly connected to each hydrostatic supporting pocket (11; 11a, 11b) and supplied with said fluid through a passage zone (59) defined by a portion of said internal surface (37) and by said external wall (29) of said boring bar (2), said passage zone (59) having a height that varies according to a radial position of said boring bar (2) such as to determine a variation in said inlet hydraulic resistance of said hydraulic supply resistance means (64).

7. Boring machine tool (1) according to claim 6, wherein said passage zone (59) is interposed between said pocket supply means (46, 49) and an annular groove (45) that is flowingly connected with said supply system (12) of said supply pressure (Pa).

8. Boring machine tool (1) according to claim 6 or 7, wherein said hydraulic supply resistance means (64) comprises pocket supply conduit means (38) that connects said pocket supply means (46, 49) to said plurality of hydrostatic supporting pockets (11; 11a, 11b).

9. Boring machine tool (1) according to claim 8, wherein said pocket supply conduit means (38) comprises a supply conduit (39) comprising a groove (41) made on an external surface (23) of said hydrostatic supporting means (9) and closed above by an internal wall (10) of said spindle means (6), said supply conduit (39) leading onto a respective hydrostatic supporting pocket (11) via a discharge hole (40).

10. Boring machine tool (1) according to claim 9, wherein each hydrostatic supporting pocket (11; 11a, 11b) discharges outwards to discharging means (42) through a further passage zone (67) interposed between each hydrostatic supporting pocket (11; 11a, 11b) and through openings (56) arranged for conveying said fluid outside said spindle means (6), said further passage zone (67) being supplied by said fluid at said working pressure (Pw) and having a height that varies according to said radial position of said boring bar (2).

11. Boring machine tool (1) according to any one of claims 8 to 10, wherein said hydrostatic supporting means (9) comprises first hydrostatic supporting means (34) wherein said pocket supply means comprises at least one pair of supply slots (46a, 46b) for supplying with said pressurised fluid said pocket supply conduit means (38), said supply slots (46a, 46b) of said pair of supply slots being spaced angularly apart from one another by a displacement angle (α) and being displaced by about 90° with respect to a hydrostatic supporting pocket (11) that they supply.

12. Boring machine tool (1) according to claim 11, wherein said pocket supply conduit means (38) comprises a semicircular supply conduit (39a) provided with a semicircular groove (41a) that extends circumferally on said external surface (23) and a longitudinal supply conduit (39b) provided with a longitudinal groove (41b) that extends on said external surface (23) along a direction that is substantially perpendicular to said semicircular supply conduit (39a), said pressurised fluid being supplied to said semicircular supply conduit (39a) by said pair of supply slots (46a, 46b).

13. Boring machine tool (1) according to any one of claims 10 to 12, wherein said hydrostatic supporting means (9) comprises second hydrostatic supporting means (35) wherein said pocket supply means (46, 49) and said pocket supply conduit means (38) are arranged in the same angular sector in which a respective hydrostatic supporting pocket (11; 11a, 11b) that they supply is arranged, in such a manner that following a flexure and/or bending of said boring bar (2), the height of said passage zone (59) of said hydraulic supply resistance means (64) increases and the height of said further passage zone (67) of said hydrostatic supporting pockets (11; 11 a, 11b) decreases, and vice versa.

14. Boring machine tool (1) according to claim 13, wherein said plurality of hydrostatic supporting pockets (11; 11a, 11b) comprises a pair of hydrostatic supporting pockets (11a, 11b) arranged reciprocally aligned along a direction that is substantially parallel to said machining axis (Z) of said boring machine tool (1).

15. Boring machine tool (1) according to claim 13 or 14, wherein said pocket supply means comprises a plurality of lesser through channels (49), each lesser through channel (49) being obtained in the thickness of said second hydrostatic supporting means (35) and being flowingly connected with a respective supply conduit (39) for supplying a respective hydrostatic supporting pocket (11; 11a, 11b) with said working pressure (Pw), and a plurality of greater through channels (47), each greater through channel (47) being obtained in the thickness of said second hydrostatic supporting means (35) and being flowingly connected, at an end part (48), with said annular groove (45) to receive said fluid at said supply pressure (Pa) and with each of said lesser through channels (49), via said passage zone (59), to supply said plurality of lesser through channels (49) with said fluid at said working pressure (Pw).

## Patentansprüche

1. Bohrmaschinenwerkzeug (1), das zum Durchführen einer Bohraufgabe an einem Werkstück angeordnet ist und mit einer Bearbeitungsachse (Z) versehen ist, wobei das Bohrmaschinenwerkzeug (1) umfasst:
- eine Bohrstange (2), die zum Abstützen eines Arbeitswerkzeugs an einem ersten Ende (3) davon angeordnet ist;
- eine hydrostatische Stützvorrichtung (5), die zum verschiebbaren und drehbaren Abstützen der Bohrstange (2) angeordnet ist, mit einer Spindeleinrichtung (6), die an einer Verbindungseinrichtung des Bohrmaschinenwerkzeugs (1) drehbar befestigt ist, und eine hydrostatische Stützeinrichtung (9), die innerhalb der Spindeleinrichtung (6) montiert ist und eine innere Oberfläche (37) umfasst, die mit einer Vielzahl von hydrostatischen Stützfächern (11; 11 a, 11 b) versehen ist, die einer Außenwand (29) der Bohrstange (2) zugewandt sind, um die letztere abzustützen, wobei jedem hydrostatischen Stützfach (11; 11 a, 11 b) der Vielzahl von hydrostatischen Stützfächern (11; 11 a, 11 b) ein Fluid mit einem Arbeitsdruck (Pw) zugeführt wird;
- ein Zufuhrsystem (12), das zum Zuführen des Fluids mit einem Zufuhrdruck (Pa) zur hydrostatischen Stützeinrichtung (9) angeordnet ist;
wobei das Bohrmaschinenwerkzeug (1) **dadurch gekennzeichnet ist, dass** das Zufuhrsystem (12) eine Rohrverteilereinrichtung (24) umfasst, die an der Bohrstange (2) montiert ist und zum Befördern des Fluids zur hydrostatischen Stützeinrichtung (9) über einen röhrenförmigen Durchlass (15) angeordnet ist, der innerhalb der Bohrstange (2) erhalten ist.

2. Bohrmaschinenwerkzeug (1) nach Anspruch 1, wobei die Bohrstange (2) eine äußere Welle (26) mit einer zylindrischen Öffnung umfasst, die zum Aufnehmen einer inneren Welle (72) der Bohrstange (2) angeordnet ist, wobei die äußere Welle (26) und die innere Welle (72) in einer solchen Weise montiert sind, dass eine innere Fläche (30) der äußeren Welle (26) und eine äußere Fläche (16) der inneren Welle (72) durch den röhrenförmigen Durchlass (15) getrennt sind.

3. Bohrmaschinenwerkzeug (1) nach Anspruch 2, wobei die Rohrverteilereinrichtung (24) eine oder mehrere Einlassleitungen (13), die in Form von Durchgangslöchern hergestellt sind, die in der Dicke der Rohrverteilereinrichtung (24) und der äußeren Welle (26) erhalten sind, zum Zuführen des Fluids zum röhrenförmigen Durchlass (15) umfasst.

4. Bohrmaschinenwerkzeug (1) nach Anspruch 2 oder 3, wobei das Zufuhrsystem (12) ferner eine oder mehrere Durchlassleitungen (33) umfasst, die zum Verbinden des röhrenförmigen Durchlasses (15) mit der hydrostatischen Stützeinrichtung (9) durch jeweilige Durchlasslöcher (32) angeordnet sind und in Form von Durchgangslöchern hergestellt sind, die in der Dicke der äußeren Welle (26) erhalten sind.

5. Bohrmaschinenwerkzeug (1) nach einem vorangehenden Anspruch, wobei die Rohrverteilereinrichtung (24) an der Bohrstange (2) an einem zweiten Ende (4) davon entgegengesetzt zum ersten Ende (3) montiert ist.

6. Bohrmaschinenwerkzeug (1) nach einem vorangehenden Anspruch, wobei der Vielzahl von hydrostatischen Stützfächern (11; 11a, 11 b) das Fluid mit dem Arbeitsdruck (Pw) über eine hydraulische Zufuhrwiderstandseinrichtung (64) zugeführt wird, die einen hydraulischen Einlasswiderstand für den Durchlass des Fluids erreicht und eine Fachzufuhreinrichtung (46, 49) umfasst, die an der inneren Oberfläche (37) hergestellt ist, mit jedem hydrostatischen Stützfach (11; 11 a, 11 b) strömend verbunden ist und der das Fluid durch eine Durchlasszone (59) zugeführt wird, die durch einen Teil der inneren Oberfläche (37) und durch die Außenwand (29) der Bohrstange (2) definiert ist, wobei die Durchlasszone (59) eine Höhe aufweist, die gemäß einer radialen Position der Bohrstange (2) variiert, um eine Veränderung des hydraulischen Einlasswiderstandes der hydraulischen Zufuhrwiderstandseinrichtung (64) zu bestimmen.

7. Bohrmaschinenwerkzeug (1) nach Anspruch 6, wobei die Durchlasszone (59) zwischen die Fachzufuhreinrichtung (46, 49) und eine ringförmige Nut (45) eingefügt ist, die strömend mit dem Zufuhrsystem (12) des Zufuhrdrucks (Pa) verbunden ist.

8. Bohrmaschinenwerkzeug (1) nach Anspruch 6 oder 7, wobei die hydraulische Zufuhrwiderstandseinrichtung (64) eine Fachzufuhrleitungseinrichtung (38) umfasst, die die Fachzufuhreinrichtung (46, 49) mit der Vielzahl von hydrostatischen Stützfächern (11; 11a, 11 b) verbindet.

9. Bohrmaschinenwerkzeug (1) nach Anspruch 8, wobei die Fachzufuhrleitungseinrichtung (38) eine Zufuhrleitung (39) mit einer Nut (41) umfasst, die an einer äußeren Oberfläche (23) der hydrostatischen Stützeinrichtung (9) hergestellt ist und oben durch eine Innenwand (10) der Spindeleinrichtung (6) geschlossen ist, wobei die Zufuhrleitung (39) zu einem jeweiligen hydrostatischen Stützfach (11) über ein Auslassloch (40) führt.

10. Bohrmaschinenwerkzeug (1) nach Anspruch 9, wobei jedes hydrostatische Stützfach (11; 11 a, 11 b) nach außen an eine Auslasseinrichtung (42) durch eine weitere Durchlasszone (67), die zwischen jedes hydrostatische Stützfach (11; 11 a, 11 b) eingefügt ist, und durch Öffnungen (56), die zum Befördern des Fluids außerhalb die Spindeleinrichtung (6) angeordnet sind, auslässt, wobei der weiteren Durchlasszone (67) das Fluid mit dem Arbeitsdruck (Pw) zugeführt wird und sie eine Höhe aufweist, die gemäß der radialen Position der Bohrstange (2) variiert.

11. Bohrmaschinenwerkzeug (1) nach einem der Ansprüche 8 bis 10, wobei die hydrostatische Stützeinrichtung (9) eine erste hydrostatische Stützeinrichtung (34) umfasst, wobei die Fachzufuhreinrichtung mindestens ein Paar von Zufuhrschlitzen (46a, 46b) zum Zuführen des Druckfluids zur Fachzufuhrleitungseinrichtung (38) umfasst, wobei die Zufuhrschlitze (46a, 46b) des Paars von Zufuhrschlitzen im Winkel um einen Verschiebungswinkel (α) auseinander beabstandet sind und um etwa 90°in Bezug auf ein hydrostatisches Stützfach (11), zu dem sie zuführen, verschoben sind.

12. Bohrmaschinenwerkzeug (1) nach Anspruch 11, wobei die Fachzufuhrleitungseinrichtung (38) eine halbkreisförmige Zufuhrleitung (39a), die mit einer halbkreisförmigen Nut (41 a) versehen ist, die sich auf dem Umfang an der äußeren Oberfläche (23) erstreckt, und eine longitudinale Zufuhrleitung (39b), der mit einer longitudinalen Nut (41 b) versehen ist, die sich an der äußeren Oberfläche (23) entlang einer Richtung erstreckt, die zur halbkreisförmigen Zufuhrleitung (39a) im Wesentlichen senkrecht ist, umfasst, wobei das Druckfluid zur halbkreisförmigen Zufuhrleitung (39a) durch das Paar von Zufuhrschlitzen (46a, 46b) zugeführt wird.

13. Bohrmaschinenwerkzeug (1) nach einem der Ansprüche 10 bis 12, wobei die hydrostatische Stützeinrichtung (9) eine zweite hydrostatische Stützeinrichtung (35) umfasst, wobei die Fachzufuhreinrichtung (46, 49) und die Fachzufuhrleitungseinrichtung (38) im gleichen Winkelsektor angeordnet sind, in dem ein jeweiliges hydrostatisches Stützfach (11; 11 a, 11 b), zu dem sie zuführen, angeordnet ist, in einer solche Weise, dass nach einem Übergang und/oder Biegen der Bohrstange (2) die Höhe der Durchlasszone (59) der hydraulischen Zufuhrwiderstandseinrichtung (64) zunimmt und die Höhe der weiteren Durchlasszone (67) der hydrostatischen Stützfächer (11; 11 a, 11 b) abnimmt und umgekehrt.

14. Bohrmaschinenwerkzeug (1) nach Anspruch 13, wobei die Vielzahl von hydrostatischen Stützfächern (11; 11 a, 11 b) ein Paar von hydrostatischen Stützfächern (11a, 11 b) umfasst, die wechselseitig ausgerichtet entlang einer Richtung angeordnet sind, die zur Bearbeitungsachse (Z) des Bohrmaschinenwerkzeugs (1) im Wesentlichen parallel ist.

15. Bohrmaschinenwerkzeug (1) nach Anspruch 13 oder 14, wobei die Fachzufuhreinrichtung eine Vielzahl von geringeren Durchgangskanälen (49), wobei jeder geringere Durchgangskanal (49) in der Dicke der zweiten hydraulischen Stützeinrichtung (35) erhalten ist und mit einer jeweiligen Zufuhrleitung (39) zum Zuführen des Arbeitsdrucks (Pw) zu einem jeweiligen hydrostatischen Stützfach (11; 11 a, 11 b) strömend verbunden ist, und eine Vielzahl von größeren Durchgangskanälen (47), umfasst, wobei jeder größere Durchgangskanal (47) in der Dicke der zweiten hydrostatischen Stützeinrichtung (35) erhalten ist und an einem Endteil (48) mit der ringförmigen Nut (45), um das Fluid mit dem Zufuhrdruck (Pa) zu empfangen, und mit jedem der geringeren Durchgangskanäle (49) über die Durchlasszone (59) zum Zuführen des Fluids mit dem Arbeitsdruck (Pw) zu der Vielzahl von geringeren Durchgangskanälen (49) strömend verbunden ist

## Revendications

1. Outil de coupe pour aléseuse (1) agencé pour réaliser une tâche d'alésage sur une pièce de travail et pourvu d'un axe d'usinage (Z), ledit outil de coupe (1) comprenant :
- une barre d'alésage (2) agencée pour supporter à une première extrémité (3) de celle-ci un outil de travail ;
- un appareil de support hydrostatique (5) agencé pour supporter de manière coulissante et rotative ladite barre d'alésage (2) comprenant des moyens de broche (6), fixés de manière rotative à des moyens de liaison dudit outil de coupe pour aléseuse (1), et des moyens de support hydrostatique (9), montés à l'intérieur desdits moyens de broche (6) et comprenant une surface intérieure (37) pourvue d'une pluralité de poches de support hydrostatique (11 ; 11a, 11b) en regard d'une paroi extérieure (29) de ladite barre d'alésage (2) pour supporter cette dernière, chaque poche de support hydrostatique (11 ; 11a, 11b) de ladite pluralité de poches de support hydrostatique (11 ; 11a, 11b) étant alimentée en un fluide à une pression de travail (Pw) ;
- un système d'alimentation (12) agencé pour alimenter lesdits moyens de support hydrostatique (9) en ledit fluide à une pression d'alimentation (Pa) ; ledit outil de coupe pour aléseuse (1) étant **caractérisé en ce que** ledit système d'alimentation (12) comprend des moyens de rampe (24) montés sur ladite barre d'alésage (2) et agencés pour acheminer ledit fluide vers lesdits moyens de support hydrostatique (9) à travers un passage tubulaire (15) obtenu à l'intérieur de ladite barre d'alésage (2).

2. Outil de coupe pour aléseuse (1) selon la revendication 1, dans lequel ladite barre d'alésage (2) comprend un arbre extérieur (26) comprenant une ouverture cylindrique agencée pour loger un arbre intérieur (72) de ladite barre d'alésage (2), ledit arbre extérieur (26) et ledit arbre intérieur (72) étant montés de telle manière qu'une face interne (30) dudit arbre extérieur (26) et une face externe (16) dudit arbre intérieur (72) sont séparées par ledit passage tubulaire (15).

3. Outil de coupe pour aléseuse (1) selon la revendication 2, dans lequel lesdits moyens de rampe (24) comprennent un ou plusieurs conduits d'entrée (13) réalisés sous la forme de trous traversants obtenus dans l'épaisseur desdits moyens de rampe (24) et dudit arbre extérieur (26) pour alimenter en ledit fluide ledit passage tubulaire (15).

4. Outil de coupe pour aléseuse (1) selon la revendication 2 ou 3, dans lequel ledit système d'alimentation (12) comprend en outre un ou plusieurs conduits de passage (33) agencés pour relier ledit passage tubulaire (15) auxdits moyens de support hydrostatique (9) par des trous de passage (32) respectifs et réalisés sous la forme de trous traversants obtenus dans l'épaisseur dudit arbre extérieur (26).

5. Outil de coupe pour aléseuse (1) selon l'une quelconque des revendications précédentes, dans lequel lesdits moyens de rampe (24) sont montés sur ladite barre d'alésage (2) à une seconde extrémité (4) de celle-ci à l'opposé de ladite première extrémité (3).

6. Outil de coupe pour aléseuse (1) selon l'une quelconque des revendications précédentes, dans lequel ladite pluralité de poches de support hydrostatique (11 ; 11a, 11b) est alimentée en ledit fluide à ladite pression de travail (Pw) à travers des moyens de résistance à l'alimentation hydraulique (64) qui assurent une résistance hydraulique d'entrée au passage dudit fluide et comprennent des moyens d'alimentation des poches (46, 49) réalisés sur ladite surface intérieure (37), en communication fluidique avec chaque poche de support hydrostatique (11 ; 11a, 11b) et alimentés en ledit fluide à travers une zone de passage (59) définie par une portion de ladite surface intérieure (37) et par ladite paroi extérieure (29) de ladite barre d'alésage (2), ladite zone de passage (59) ayant une hauteur qui varie en fonction d'une position radiale de ladite barre d'alésage (2) de manière à déterminer une variation dans ladite résistance hydraulique d'entrée desdits moyens de résistance à l'alimentation hydraulique (64).

7. Outil de coupe pour aléseuse (1) selon la revendication 6, dans lequel ladite zone de passage (59) est interposée entre lesdits moyens d'alimentation des poches (46, 49) et une rainure annulaire (45) qui est en communication fluidique avec ledit système d'alimentation (12) de ladite pression d'alimentation (Pa).

8. Outil de coupe pour aléseuse (1) selon la revendication 6 ou 7, dans lequel lesdits moyens de résistance à l'alimentation hydraulique (64) comprennent des moyens de conduit d'alimentation des poches (38) qui relient lesdits moyens d'alimentation des poches (46, 49) à ladite pluralité de poches de support hydrostatique (11 ; 11a, 11b).

9. Outil de coupe pour aléseuse (1) selon la revendication 8, dans lequel lesdits moyens de conduit d'alimentation des poches (38) comprennent un conduit d'alimentation (39) comprenant une rainure (41) réalisée sur une surface extérieure (23) desdits moyens de support hydrostatique (9) et fermée au-dessus par une paroi intérieure (10) desdits moyens de broche (6), ledit conduit d'alimentation (39) débouchant sur une respective poche de support hydrostatique (11) à travers un trou d'évacuation (40).

10. Outil de coupe pour aléseuse (1) selon la revendication 9, dans lequel chaque poche de support hydrostatique (11 ; 11a, 11b) est évacuée vers l'extérieur vers des moyens d'évacuation (42) à travers une autre zone de passage (67) interposée entre chaque poche de support hydrostatique (11 ; 11a, 11b) et à travers des ouvertures (56) agencées pour acheminer ledit fluide vers l'extérieur desdits moyens de broche (6), ladite autre zone de passage (67) étant alimentée par ledit fluide à ladite pression de travail (Pw) et ayant une hauteur qui varie en fonction de ladite position radiale de ladite barre d'alésage (2).

11. Outil de coupe pour aléseuse (1) selon l'une quelconque des revendications 8 à 10, dans lequel lesdits moyens de support hydrostatique (9) comprennent des premiers moyens de support hydrostatique (34) dans lesquels lesdits moyens d'alimentation des poches comprennent au moins une paire de fentes d'alimentation (46a, 46b) pour alimenter en ledit fluide sous pression lesdits moyens de conduit d'alimentation des poches (38), lesdites fentes d'alimentation (46a, 46b) de ladite paire de fentes d'alimentation étant espacées angulairement l'une de l'autre d'un angle de débattement (α) et étant décalées d'environ 90° par rapport à une poche de support hydrostatique (11) qu'elles alimentent.

12. Outil de coupe pour aléseuse (1) selon la revendication 11, dans lequel lesdits moyens de conduit d'alimentation des poches (38) comprennent un conduit d'alimentation demi-circulaire (39a) pourvu d'une rainure demi-circulaire (41a) qui s'étend circonférentiellement sur ladite surface extérieure (23) et un conduit d'alimentation longitudinal (39b) pourvu d'une rainure longitudinale (41b) qui s'étend sur ladite surface extérieure (23) selon une direction qui est sensiblement perpendiculaire audit conduit d'alimentation demi-circulaire (39a), ledit fluide sous pression étant acheminé audit conduit d'alimentation demi-circulaire (39a) par ladite paire de fentes d'alimentation (46a, 46b).

13. Outil de coupe pour aléseuse (1) selon l'une quelconque des revendications 10 à 12, dans lequel lesdits moyens de support hydrostatique (9) comprennent des seconds moyens de support hydrostatique (35) dans lesquels lesdits moyens d'alimentation des poches (46, 49) et lesdits moyens de conduit d'alimentation des poches (38) sont agencés dans le même secteur angulaire dans lequel une respective poche de support hydrostatique (11 ; 11a, 11b) qu'ils alimentent est agencée, de telle manière que suite à une flexion et/ou une courbure de ladite barre d'alésage (2), la hauteur de ladite zone de passage (59) desdits moyens de résistance à l'alimentation hydraulique (64) augmente et la hauteur de ladite autre zone de passage (67) desdites poches de support hydrostatique (11 ; 11a, 11b) diminue, et vice versa.

14. Outil de coupe pour aléseuse (1) selon la revendication 13, dans lequel ladite pluralité de poches de support hydrostatique (11 ; 11a, 11b) comprend une paire de poches de support hydrostatique (11a, 11b) agencées réciproquement alignées selon une direction qui est sensiblement parallèle audit axe d'usinage (Z) dudit outil de coupe pour aléseuse (1).

15. Outil de coupe pour aléseuse (1) selon la revendication 13 ou 14, dans lequel lesdits moyens d'alimentation des poches comprennent une pluralité de canaux traversants plus petits (49), chaque canal traversant plus petit (49) étant obtenu dans l'épaisseur desdits seconds moyens de support hydrostatique (35) et étant en communication fluidique avec un respectif conduit d'alimentation (39) pour alimenter en ladite pression de travail (Pw) une respective poche de support hydrostatique (11 ; 11a, 11b), et une pluralité de canaux traversants plus grands (47), chaque canal traversant plus grand (47) étant obtenu dans l'épaisseur desdits seconds moyens de support hydrostatique (35) et étant en communication fluidique, à une partie d'extrémité (48), avec ladite rainure annulaire (45) pour recevoir ledit fluide à ladite pression d'alimentation (Pa) et avec chacun desdits canaux traversants plus petits (49), à travers ladite zone de passage (59), pour alimenter ladite pluralité de canaux traversants plus petits (49) en ledit fluide à ladite pression de travail (Pw).
